# EUROPÄISCHE PATENTSCHRIFT

(11) **EP 2 944 851 B1**
(45) Veröffentlichungstag und Bekanntmachung des Hinweises auf die Patenterteilung: **19.02.2020**
(21) Anmeldenummer: 15167899.2
(22) Anmeldetag: 15.05.2015
(51) Int. Cl.: F16K 5/06

(54) **VERWENDUNG EINER KUPPLUNG IN EINER GASLEITUNG**
USE OF A COUPLING IN A GAS LINE
UTILISATION D'UN RACCORD DANS UNE CONDUITE DE GAZ

(30) Priorität: 16.05.2014 DE 202014102319 U
(43) Veröffentlichungstag der Anmeldung: 18.11.2015
(73) Patentinhaber: DILO Armaturen und Anlagen GmbH, 87727 Babenhausen (DE)
(72) Erfinder: Kohler, Robert, 89297 Messhofen (DE); Plard, Tobias, 87737 Boos (DE)
(74) Vertreter: Patentanwälte Olbricht, Buchold, Keulertz Partnerschaft mbB

(56) Entgegenhaltungen:
- CN-U- 202 392 233
- CN-Y- 201 065 967
- DE-A1-102014 202 149
- US-A- 5 551 479
- US-A1- 2012 161 053

## Beschreibung

Die Erfindung betrifft die Verwendung einer Kupplung zur Anordnung in einer Gasleitung einer gasisolierten Schaltanlage sowie die Verwendung einer Prüfanordnung mit einer Kupplung zur Anordnung einer Messanordnung an einer Gasleitung einer gasisolierten Schaltanlage.

Gasisolierte Schaltanlagen oder Prüfsysteme sind, im Idealfall, als vollständig gasdicht gekapselte Systeme ausgebildet. Für Hochspannungstechnik ist zu Isolationszwecken der elektrische Innenleiter mit Isoliergas, insbesondere Schwefelhexafluorid (SF6), umgeben, das eine deutlich höhere Durchschlagsfestigkeit als Luft besitzt. SF6 ist unter Normalbedingungen ein farb- und geruchloses, ungiftiges inertes Gas, das insbesondere in der Mittel- und Hochspannungstechnik als Isoliergas Verwendung findet.

SF6 zählt jedoch auch zu den am stärksten wirksamen Treibhausgasen. Der Einsatz ist somit unter Umweltschutzgesichtspunkten höchst problematisch. Es muss daher insbesondere die Freisetzung von SF6 aus den entsprechenden Anlagen minimiert, im günstigsten Fall ausgeschlossen werden. Um dieses Ziel zu erreichen müssen Leckagen frühzeitig erkannt und zügig behoben werden. Um gasisolierte Schaltanlagen kontinuierlich zu überwachen werden spezielle Messgeräte, sogenannte Dichtewächter eingesetzt. Um deren Funktion sicherzustellen, müssen die Messgeräte regelmäßig überprüft werden. Hierzu werden die Messgeräte in der Regel von der Anlage getrennt, abgebaut und in einer Prüfanordnung einem Funktionstest unterzogen.

Im Zusammenhang mit der vorliegenden Erfindung ist unter einem Dichtewächter insbesondere ein Messgerät zur Überwachung der Dichte des in gasisolierten Hoch- oder Mittelspannungsanlagen oder - geräte, zum Beispiel Hochspannungsschaltanlagen, -wandlern, -rohrleitern, Schaltgeräte und Transformatoren, als Isolator befindlichen Gases, zum Beispiel SF6, zu verstehen. Die Dichtewächter werden zur Überwachung der Dichte des Gases eingesetzt und erfassen eine Änderung der Gasdichte als Druckänderung und zeigen diese an. Beim Auftreten von Leckagen unterschreiten die Messwerte einen Schwellenwert, woraufhin ein Alarmsignal ausgelöst wird.

In bekannten Systemen sind die Messgeräte über eine Kupplung, die eine Absperrvorrichtung aufweist mit einer Gasquelle, beispielsweise einem Schaltschrank oder dergleichen verbunden.

CN 202 392 233 U, US 2012/161053 A1, CN 201 065 967 Y, US 5 551 479 A und DE 10 2014 202149 A1 offenbaren jeweils eine Kupplung mit einem Zufuhranschluss, einem Kupplungsanschluss, und einem mit dem Zufuhranschluss und dem Kupplungsanschluss in fluidischer Verbindung stehenden Messanschluss für ein Messgerät, welcher zwischen dem Zufuhranschluss und der Absperrvorrichtung angeordnet ist.

Um eine Funktionsprüfung bzw. Eichung der Messgeräte durchzuführen, werden diese vom gashaltigen System getrennt, nach Entnahme des noch in der Kupplung verbliebenen Gases abgebaut, und in einer Prüfvorrichtung einem Funktionstest unterzogen.

Diese Praxis erweist sich als nachteilig, da zum Einen spezielle Vorkehrungen getroffen werden müssen, um das noch in der Kupplung befindliche Gas vor dem Abbau des Messgerätes aus dieser abzuziehen. Darüber hinaus muss das Messgerät vom Kupplungsaufbau vollständig getrennt und in einer gesonderten Prüfvorrichtung einem Funktionstest unterzogen werden. Nach der Funktionsprüfung muss das Messgerät wieder eingebaut werden. Dies ist kosten- und zeitintensiv.

Aufgabe der vorliegenden Erfindung ist es, die Funktionsprüfung eines in einer Medienleitung angeordneten Messgerätes wesentlich zu vereinfachen.

Die Aufgabe wird gelöst durch das Verfahren nach Anspruch 1 bzw. durch das Verfahren nach Anspruch 8.

Die Kupplung ist zur Anordnung in einer Medienleitung vorgesehen. Bei dieser Medienleitung handelt es sich um eine Gasleitung, beispielsweise eine mit einem Schaltschrank versehene Gasleitung. Über diese Gasleitung kann beispielsweise Isoliergas in den Schaltschrank eingeleitet werden. Die Kupplung umfasst wenigstens ein Kupplungsgehäuse das die einzelnen Kupplungsteile zusammenfasst bzw. aufnimmt. Des Weiteren ist ein Zufuhranschluss vorgesehen, über den beispielsweise Gas in einen Schaltschrank oder dergleichen eingeleitet bzw. aus dieser abgezogen werden kann. Der Zufuhranschluss dient der Leitung eines in einer Strömungsrichtung durch die Kupplung fließenden Gas oder Gasgemisches. Die Kupplung weist darüber hinaus einen Kupplungsanschluss auf. Dieser dient bevorzugt zum Anschluss einerseits einer Gasquelle, andererseits eines Leitungsabschnittes. Zum Anschluss eines Messgerätes an der Kupplung weist diese einen mit dem Zufuhranschluss und dem Kupplungsanschluss in fluidischer Verbindung stehenden Messanschluss für ein Messgerät auf. Die Kupplung verfügt des Weiteren über eine Absperrvorrichtung mit einer Verschlussstellung sowie einer Offenstellung. Über die Absperrvorrichtung kann eine Unterbrechung des Medienflusses durch die Kupplung erreicht werden.

Die Kupplung zeichnet sich dadurch aus, dass die Absperrvorrichtung in der Verschlussstellung die fluidische Verbindung zwischen Zufuhranschluss und Messanschluss, nicht jedoch zwischen Messanschluss und Kupplungsanschluss absperrt.

Diese Anordnung bringt überraschende Vorteile mit sich. Es wird erreicht, dass zur Funktionsprüfung des Messgerätes dieses nicht aus der Anlage abgebaut werden muss. Durch die Sperrung des Zufuhranschlusses wird zwar die fluidische Verbindung zwischen Zufuhranschluss und Messanschluss unterbrochen, sodass ein Medienfluss in die Kupplung über den Zufuhranschluss in Richtung des Kupplungsanschluss unterbunden wird. Die Position der Absperrvorrichtung lässt jedoch gleichwohl nach wie vor einen Medienfluss zwischen Messanschluss bzw. daran angeordnetem Messgerät und Kupplungsanschluss zu. Um eine Funktionsprüfung des Messgerätes durchzuführen, muss dieses nun nicht mehr von der Kupplung getrennt werden. Stattdessen kann die Funktionsprüfung bei angeschlossenem Messgerät durchgeführt werden. Hierzu wird beispielsweise eine Medienleitung mit größerem Durchmesser am Kupplungsanschluss angeschlossen. Es kommt beim Anschluss der Medienleitung zum Druckabfall in der Kupplung, da das hier verbliebene, nach wie vor druckbeaufschlagte Medium aus dieser in die Medienleitung entweicht. Der dabei stattfindende Druckabfall wird vom Messgerät detektiert und angezeigt. Es kann so in einfacher Art und Weise eine Funktionsprüfung des Messgerätes durchgeführt werden, ohne dies aus der Anlage zu entfernen.

Die Notwendigkeit, eine aufwändige Prüfvorrichtung vorzusehen, entfällt. Neben der Detektion des Druckabfalls am Kupplungsanschluss besteht selbstverständlich auch die Möglichkeit, nach vollständiger Entnahme des noch im der Kupplung verbliebenen Gases, über den Kupplungsanschluss ein unter Druck stehendes Medium in die Kupplung einzuleiten und hiermit die Funktionsprüfung des Messgerätes, beispielsweise Druckmessgerätes, durchzuführen.

Bevorzugt wird nach Abschluss der Prüfung die während der Prüfung entnommene Isoliergasmenge über den Kupplungsanschluss wieder in die Anlage eingeleitet und die Füllmenge somit ausgeglichen. Nach Anschluss der Medienleitung am Kupplungsanschluss bzw. nach Entnahme einer am Kupplungsanschluss angeordneten Medien- oder Prüfleitung und Verschluss des Kupplungsanschlusses kann die Absperrvorrichtung von der Verschluss- in die Offenstellung überführt werden. Hiernach wird die Kupplung mit über den Zufuhranschluss einströmendem Gas gefüllt. Das Messgerät steht wieder für die Überwachung zur Verfügung. Insgesamt lässt der Kupplungsaufbau eine schnellere und wesentlich vereinfachte Prüfung des Messgerätes zu und vermeidet dessen zeit- und kostenintensive Entnahme aus dem System zu Prüfzwecken. Findet aufgrund des dann austretenden, bisher noch in der Kupplung bzw. dem Kupplungsraum zwischen Messanschluss und Kupplungsanschluss verbliebenen Mediums ein Druckabfall statt, wird dieser durch das Messgerät detektiert.

Konstruktiv wird es als günstig angesehen, wenn die Absperrvorrichtung dem Messanschluss und dem Kupplungsanschluss vorgelagert zwischen Zufuhranschluss und Messanschluss angeordnet ist. Der Messanschluss kann dabei beispielsweise in einem Einleitungs- bzw. Kreuzungspunkt mit der Hauptleitung der Kupplung, die den Zufuhranschluss mit dem Kupplungsanschluss verbindet, vorgesehen werden. Die Absperrvorrichtung ist dann beispielsweise zwischen diesem Einleitungs- bzw. Kreuzungspunkt und dem Zufuhranschluss in der Kupplung angeordnet. Der Messanschluss ist nicht zwingend rohr-oder leitungsförmig oder als Anschluss oder Abzweig ausgebildet. Der Messanschluss kann auch als in der Hauptleitung der Kupplung und/oder einem Medienstrom angeordneter Sensor oder als Detektionsgerät ausgebildet werden. Auch diese Konfiguration ist im Zusammenhang mit der vorliegenden Erfindung als Messanschluss zu verstehen.

Als günstig wird angesehen, wenn der Kupplungsanschluss dem Zufuhranschluss im Kupplungsgehäuse gegenüberliegend angeordnet ist. Gegenüberliegend ist hierbei insbesondere als relativ zur Strömungsrichtung bzw. in Strömungsrichtung zu verstehen. In anderen Worten, der Kupplungsanschluss ist an einer ersten Seite des Kupplungsgehäuses angeordnet, während der Zufuhranschluss an der gegenüberliegenden Gehäuseseite vorgesehen ist. Das Medium strömt dann vom Kupplungsanschluss, insbesondere linear, durch das Kupplungsgehäuse zum Zufuhranschluss oder umgekehrt.

Als vorteilhaft wird angesehen, wenn in der Kupplung der Messanschluss mit einem definierten Winkel zur Strömungsrichtung im Kupplungsgehäuse angeordnet ist. So kann der Messanschluss beispielsweise als unter einem Winkel, insbesondere von zwischen 1° und 90° zur Strömungsrichtung abzweigender Anschluss ausgebildet werden. Selbstverständlich können hierbei jedoch auch andere, insbesondere unter strömungstechnischen Gesichtspunkten günstige bzw. angepasste Winkel vorgesehen werden.

Der Messanschluss ist insbesondere als Schraub-, Steck-, Rast-oder Bajonettanschluss ausgebildet und erlaubt so eine bevorzugt lösbare Anordnung des Messgerätes. Die Erfindung bleibt nicht auf die genannten Schraub-, Steck-, Rast- oder Bajonettanschlüsse beschränkt. Selbstverständlich kann jede, dem Fachmann geläufige Verbindungsart, gewählt werden, um eine bevorzugt lösbare Anordnung des Messgerätes an der Kupplung durchzuführen. Vorteil hiervon ist, dass bei defektem Messgerät, dieses schnell und ohne aufwändige Hilfsmittel ausgetauscht werden kann.

Da sich die vorgeschlagene Kupplung als vorteilhaft für die Verwendung in einem, mit einem Isoliergas gefüllten Schaltschrank, eignet, ohne die Erfindung jedoch hierauf zu beschränken, wird es als günstig angesehen, wenn das Messgerät als Druckmessgerät, insbesondere als Schaltkontakte aufweisender Dichtewächter ausgebildet ist. Bei der Funktionsprüfung werden dabei insbesondere die Schaltkontakte geprüft. Neben einer Überprüfung der Dichteüberwachungsfunktion kann durch Anschluss eines geeigneten Prüfgerätes an den Schaltkontakten auch die Funktion des gegebenenfalls elektronischen Dichtewächters überprüft werden.

Die Betätigung der Absperrvorrichtung wird dadurch vereinfacht, dass, wie in einer Weiterbildung vorgesehen, die Absperrvorrichtung manuell oder automatisch betätigbar ausgebildet ist.

Als günstig wird angesehen, wenn die Absperrvorrichtung als Kugelhahn ausgebildet ist bzw. einen Kugelhahn aufweist. Durch den Kugelhahn kann eine relativ schnelle Sperrung erreicht werden. Die im Kugelhahn vorgesehene Sperrkugel ist dabei günstiger Weise so ausgebildet, das die Strömungseigenschaften des Mediums bei geöffneter Absperrvorrichtung durch die Kugel nicht beeinträchtigt werden. Je nach Ausgestaltung des Sperrelementes in der Absperrvorrichtung kann zusätzlich eine auswählbare Strömungsleitung erreicht werden.

Um nach Trennung des Medienflusses eine Leckage an der Absperrvorrichtung wirksam zu unterbinden, wird es als vorteilhaft angesehen, wenn die Absperrvorrichtung wenigstens eine Dichtung aufweist. Diese kann beispielsweise das Sperrelement umschließen bzw. am Übergang von Absperrvorrichtung zu Kupplungsgehäuse angeordnet werden. Hierdurch wird eine zusätzliche Abdichtung erreicht und beispielsweise der Austritt von Isoliergas wirksam unterbunden.

Als vorteilhaft wird angesehen, wenn der Zufuhranschluss als Teil des Kupplungsgehäuses ausgebildet ist. In diesem Zusammenhang ist der Zufuhranschluss insbesondere in das Kupplungsgehäuse eingeformt oder an diesem angeformt vorgesehen. Neben dem Vorteil, dass durch die einstückige Ausbildung von Kupplungsgehäuse und Zufuhranschluss eine wesentlich stabilere Verbindung zwischen diesen Elementen der Kupplung geschaffen wird, wird hierdurch auch eine weitere Quelle für Leckage eliminiert. Die Kupplung kann zudem kostengünstiger hergestellt werden, da zusätzlicher Montageaufwand für die Anbringung des Zufuhranschlusses vermieden wird.

Eine als günstig angesehene Weiterbildung der Kupplung sieht vor, dass der Kupplungsanschluss, der selbstverständlich auch am Kupplungsgehäuse an- oder in dieses eingeformt vorgesehen werden kann, als in das Kupplungsgehäuse einsetzbares Element, insbesondere als einsetzbares und/oder im Kupplungsgehäuse festlegbares Kupplungsstück ausgebildet ist. Eine besonders dichte Verbindung zwischen Kupplungsgehäuse und Kupplungsanschluss kann dabei bevorzugt dadurch erreicht werden, das zwischen Kupplungsgehäuse und Element wenigstens eine Dichtung angeordnet ist.

Eine Weiterbildung sieht vor, dass der Messanschluss mit dem in das Kupplungsgehäuse einsetzbaren Element koppelbar ist. Vorteil hiervon ist es, dass eine besonders leichte, genaue und schnelle Montage des Messanschlusses durchgeführt werden kann und eine fluidische Verbindung zwischen Messanschluss und Kupplungsanschluss sichergestellt wird.

Eine Ausführungsform der Kupplung sieht vor, dass ein Betätigungselement für die Absperrvorrichtung vorgesehen ist, das außenseitig am Kupplungsgehäuse angeordnet ist. Die Sperrung des Medienflusses kann somit schnell und einfach durchgeführt werden. Das Betätigungselement ist insbesondere als Hebel, Stellschraube, Schieber oder Antrieb ausgebildet, ohne die Erfindung hierauf zu beschränken. Unter konstruktiven Gesichtspunkten erweist es sich als vorteilhaft, wenn das Betätigungselement dem Messanschlusses gegenüberliegend am Kupplungsgehäuse angeordnet ist. Das Betätigungselement erweist sich dann als nicht störend und beeinträchtigt das am Messanschluss beispielsweise angeordnete Messgerät nicht. Auch kann die Wirkung des Absperrens unmittelbar am Messgerät abgelesen werden, da durch das Betätigungselement keine Sichtbeeinträchtigung erfolgt.

In einer bevorzugten Weiterbildung ist vorgesehen, dass der Zufuhranschluss und/oder der Kupplungsanschluss als Flansch-, Steck-, Schraub-, Rast-, Schnapp- oder Bajonettanschluss ausgebildet ist/sind. Beim Zusammenbau der Kupplung bzw. deren Einbau z. B. an einem Schaltschrank oder dergleichen erweist sich diese Ausgestaltung als vorteilhaft, da die einzelnen Elemente der Kupplung zügig und ohne Werkzeuge miteinander verbunden werden können. Auch ermöglicht die vorgenannte Ausgestaltung der Anschlüsse eine Variation hinsichtlich des Kupplungsanschluss bzw. des Zufuhranschlusses. Die Kupplung kann somit frei wählbar an die jeweiligen Gegebenheiten bzw. Einsatzgebiete angepasst werden. Insbesondere durch die Ausgestaltung des Kupplungsanschlusses als Flanschanschluss kann gleichermaßen eine stabile und dauerhafte Verbindung von Kupplung und beispielsweise Schaltschrank zur Verfügung gestellt werden.

Ein Austritt von noch in dem Kupplungsgehäuse befindlichem Medium wird wirkungsvoll dadurch verhindert, dass der Kupplungsanschluss als selbstschließender Kupplungsanschluss ausgebildet ist. Weiter verbessert wird diese Konfiguration dadurch, dass der Kupplungsanschluss geeignet bzw. ausgebildet ist, um mit einem den Kupplungsanschluss freigebenden oder schließenden Kupplungsgegenstück verbunden zu werden. Dieses Kupplungsgegenstück schließt insbesondere den Kupplungsanschluss bei der Verbindung von der Umwelt ab und verhindert ein Austreten des Mediums aus dem Kupplungsanschluss im Augenblick des Verbindens.

Gleichermaßen von Bedeutung ist eine Medienleitung mit einer Kupplung, die insbesondere wie zuvor ausgeführt ausgebildet ist. Die Medienleitung ist als Leitung für Gas oder Gasgemische, insbesondere für SF6 -Gas oder SF₆ -Gas beinhaltende Gemische aus einer Schaltanlage vorgesehen.

Die Medienleitung ist dabei bevorzugt derart ausgebildet, dass eine Verbindung des Zufuhranschlusses mit einer Schaltanlage und des Kupplungsanschlusses mit einem weiterführenden Medienleitungsteil möglich ist. Die Medienleitung kann dabei auch Teil einer Prüfanordnung sein. Medienleitung kann jedoch auch dazu verwendet werden, ein Isoliergas in einer Schaltanlage einzuleiten.

Als vorteilhaft wird angesehen, wenn in der Medienleitung der Kupplungsanschluss als selbstschließende Kupplung mit einem den Kupplungsanschluss bildenden Kupplungsstück und einem mit diesem in Eingriff bringbaren Kupplungsgegenstück ausgebildet ist, und die Kupplung durch oder bei Ankoppeln des Kupplungsgegenstücks freigebbar ist. In einer Ausführungsform der Medienleitung ist diese als Befüllvorrichtung für einen Schaltschrank oder einen sonstigen gasaufnehmenden Behälter ausgebildet. Die Kupplung stellt dabei dann einen Druckmessgerät bzw. Messgerät zur Verfügung, dass dauerhafter in der Medienleitung verbleibt und hier auftretende Druckabfälle anzeigt. Gleichzeitig oder alternativ kann das Messgerät auch zur Mengenmessung des über die Medienleitung geführten Mediums, insbesondere Gases ausgebildet sein.

Als günstig wird angesehen, wenn eine Absperrvorrichtung zur Unterbrechung der Medienleitung vorgesehen ist. Diese Absperrvorrichtung kann dabei in einer Kupplung angeordnet sein. Gleichzeitig besteht jedoch auch die Möglichkeit, dass eine zusätzliche Absperrvorrichtung in der Medienleitung vorgesehen ist. Beide Varianten sind von der Erfindung umfasst.

In einer als vorteilhaft angesehenen Weiterbildung der Medienleitung ist vorgesehen, dass der Zufuhranschluss als Teil des Kupplungsgehäuses ausgebildet, insbesondere in das Kupplungsgehäuse eingeformt oder an dieses angeformt vorgesehen ist. In diesem Zusammenhang wird es als günstig erachtet, wenn der Zufuhranschluss wenigstens eine Anschlussdichtung aufweist. Diese Anschlussdichtung dichtet die Verbindung zwischen Zufuhranschluss und Medien- bzw. Gasbehälter ab und verhindert bzw. reduziert Leckagen. Die Anschlussdichtung ist dabei insbesondere außen- und/oder innenseitig am Zufuhranschluss und bevorzugt mit dem Zufuhranschluss lösbar oder fest verbunden, insbesondere aufgesteckt, auf- oder angeklebt, auf- oder angespritzt, vorgesehen.

Als günstig wird angesehen, wenn am Messanschluss ein Messgerät, insbesondere ein Druckmessgerät zur Druckmessung in der Medienleitung anschließbar ist. Die Medienleitung kann dann vorteilhafter Weise dazu verwendet werden, als Teil eines Prüfgerätes bzw. einer Prüfanordnung zu dienen.

Um eine bessere Ablesbarkeit des Messgerätes im Einbauzustand zu erreichen, wird es als vorteilhaft angesehen, wenn in einer Einbaustellung der Kupplung in der Medienleitung der Messanschluss bzw. ein daran angeordnetes Messgerät oberseitig und ein Betätigungselement für die Absperrvorrichtung unterseitig am Kupplungsgehäuse angeordnet ist.

Die Erfindung umfasst auch die Verwendung einer Prüfanordnung mit einer Kupplung, insbesondere einer Kupplung wie zuvor beschrieben. Die Kupplung dient insbesondere zur Anordnung der Messanordnung an einer Gasleitung. Die Prüfanordnung umfasst wenigstens einen Zufuhranschluss für ein eine Strömungsrichtung durch die Kupplung aufweisendes Gas oder Gasgemisch, einen Kupplungsanschluss, einen mit dem Zufuhranschluss und dem Kupplungsanschluss in fluidischer Verbindung stehenden Messanschluss, und eine Absperrvorrichtung mit einer Verschlussstellung. Dabei wird zur Prüfung eines am Messanschluss angeordneten Messgerätes durch die Absperrvorrichtung in der Verschlussstellung die fluidische Verbindung zwischen Zufuhranschluss und Messanschluss, nicht jedoch zwischen Messanschluss und Kupplungsanschluss, abgesperrt.

Die Prüfanordnung erlaubt somit die Funktionsprüfung des Messgerätes ohne dieses von der Kupplung zu lösen. Dies erweist sich insbesondere bei der Funktionsprüfung von in einer Schaltanlage vorgesehenen Dichtewächtern als vorteilhaft. Ein Ausbau des Dichtewächters kann unterbleiben, da durch die Absperrvorrichtung geeigneter Weise eine Trennung des Messgerätes von der Gasquelle durchgeführt werden kann.

Um einen Druckabfall bei Verwendung der Prüfanordnung über das Messgerät detektieren zu können, sieht eine Weiterbildung der Prüfanordnung vor, dass an dem Kupplungsanschluss ein einen gegenüber der Medienleitung erweiterten Querschnitt aufweisendes Medienauffangelement anordenbar ist. Dieses Medienauffangelement kann beispielsweise als Behälter ausgebildet werden. Eine Ausgestaltung als Schlauch oder Rohr ist dabei ebenfalls möglich. Wird dieses Medienauffangelement über den Kupplungsanschluss mit der Kupplung verbunden, wird dabei der Kupplungsanschluss geöffnet, so dass das im Kupplungsgehäuse verbliebene Medium austreten kann. Aufgrund der Querschnittserweiterung in der dem Kupplungsanschluss nachgeordneten Medienauffangelement kommt es zu einem Druckabfall, der vom Dichtewächter als Fehler erkannt und bei voll funktionsfähigem Messgerät von diesem angezeigt wird.

Alternativ kann beim Prüfvorgang am Kupplungsanschluss eine Schlaucheinheit montiert werden, die das zwischen der Absperrvorrichtung und dem Kupplungsanschluss vorhandene Fluid aufnimmt. Beim Anschluss kommt es auch hierbei zu einem abfallenden Druck der vom Dichtewächter analysiert wird. Der anfallende Druck wird dann als Fehlfunktion erkannt und ein entsprechender Alarm ausgelöst. Zusätzlich oder alternativ können selbstverständlich auch die Schaltkontakte des Messgerätes, d. h. des Dichtewächters während des Druckabfalles überprüft werden um festzustellen, ob es zu einer funktionierenden Analyse und Signalverarbeitung kommt.

In einer weiteren vorteilhaften Ausgestaltung der Prüfanordnung ist vorgesehen, dass an dem Kupplungsanschluss ein Prüfgerät, insbesondere eine mit einem Druckmessgerät versehene Druckquelle anschließbar ist. Hierüber kann die Kupplung druckbeaufschlagt werden, was gleichfalls zu einer Detektion durch den Dichtewächter führt. Eine Funktionsanalyse des Messgerätes kann dabei ebenfalls durchgeführt werden.

Als günstig wird angesehen, dass mit der zuvor beschriebenen Ausführungsform der Prüfanordnung das Messgerät dauerhaft in der Prüfanordnung verbleibt.

Durch die Ausgestaltung der Kupplung, eine mit der Kupplung ausgestatteten Medienleitung und der zuletzt beschriebenen Prüfanordnung wird die Überwachung von insbesondere Isoliergas enthaltenden Gehäusen wesentlich vereinfacht. Bedingt durch die Tatsache, dass das Messgerät zur Funktionsprüfung nicht aus der Anlage entnommen werden muss, kommt es bei der routinemäßigen Prüfung der Geräte zu Zeitersparnis, zudem unterbleibt ein Ausbau der Geräte, der mit einer zumindest teilweisen Stilllegung der Anlage einhergeht. Gleichzeitig wird auch vermieden, dass bei Aus- und Einbau des Messgerätes dieses beschädigt wird. Selbstverständlich eignet sich die vorgeschlagene Kupplung auch zum Nachrüsten bestehender Systeme.

In der Zeichnung ist die verwendete Kupplung in einem Ausführungsbeispiel schematisch dargestellt. Es zeigt:

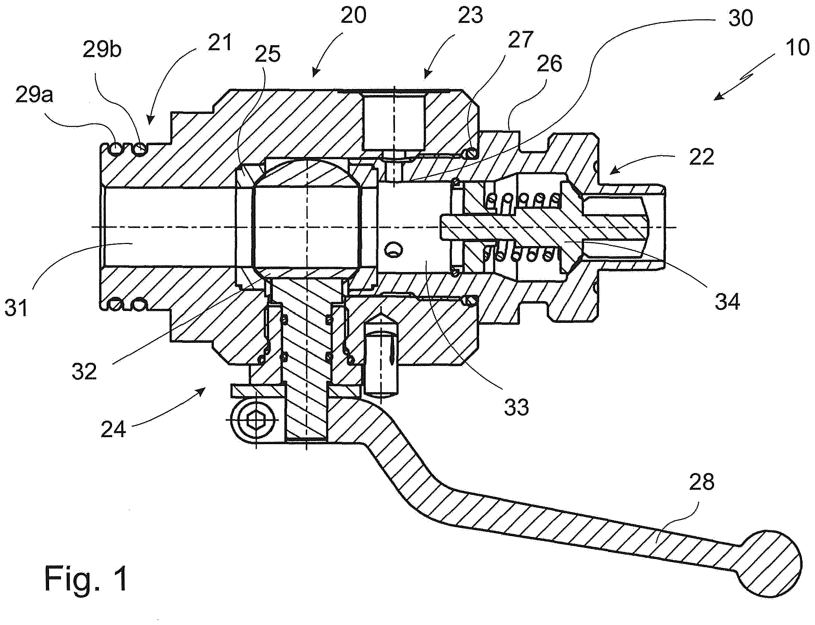

- Fig. 1: die Kupplung in seitlicher Schnittdarstellung

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen.

Figur 1 zeigt eine Kupplung 10, die die Nachteile des Standes der Technik überwindet, da bei Verwendung der Kupplung ein an einem Messanschluss 23 angeordnetes Messgerät (nicht dargestellt) während der Funktionsprüfung nicht von der Kupplung 10 gelöst werden muss. Die Kupplung 10 ist beispielsweise an einem Schaltschrank angeordnet, der mit einem Isoliergas, beispielsweise Schwefelhexafluorid, gefüllt ist. Das Isoliergas steht in dem Kupplungsgehäuse 20 am Kupplungsanschluss 22 an. Das Isoliergas steht dabei unter Druck. Dieser Druck wird kontinuierlich durch ein am Messanschluss 23 angeordnetes Messgerät überwacht. Dieses Messgerät ist über den Messanschluss 23, der einen Kreuzungspunkt 30 mit einer Hauptleitung 31 der Kupplung 10 aufweist, in die Kupplung 10 eingebunden. Tritt im System ein Leck auf, über das das Isoliergas Austritt, wirkt sich dies in einem Druckabfall aus. Der Druckabfall wird über das Messgerät detektiert und bei unterschreiten eines Schwellenwertes angezeigt. Bei bisher verwendeten Kupplungen 10 ist zwar ebenfalls eine Absperrvorrichtung 24 vorgesehen, diese ist jedoch in der Regel dem Messanschluss 23 direkt zugeordnet. Soll nun eine Funktionsprüfung des Messanschlusses 23 bzw. eines dort vorgesehenen Prüf- oder Messgerätes durchgeführt werden, so wird die Absperrvorrichtung 24 betätigt, beispielsweise durch Verschwenken des Hebels 28, und der Messanschluss 23 vom Gasstrom getrennt. Das Messgerät kann nun ausgebaut und einer Ergänzungsprüfung unterzogen werden. Diese aus dem Stand der Technik bekannte Ausgestaltung weist den Nachteil auf, dass das Messgerät ausgebaut werden muss. Die in Figur 1 dargestellte Kupplung 10 bildet den Stand der Technik somit vorteilhaft weiter, da aufgrund der Anordnung der Absperrvorrichtung 24 in der Kupplung eine Funktionsprüfung des am Messanschluss 23 angeordneten Messgerätes ohne dessen Ausbau durchgeführt werden kann. Wie in Figur 1 gezeigt, ist die Absperrvorrichtung 24 dem Messanschluss 23 und dem Kupplungsanschluss 22 vorgelagert zwischen Zufuhranschluss 21 und Messanschluss 23 angeordnet. Wird der Hebel 28, der unmittelbar auf die Absperrvorrichtung 24 bzw. ein hierin vorgesehenes, kugelartiger ausgebildetes und mit einem Durchgang versehenes Sperrelement 32 wirkt, verschwenkt so wird der Zufuhranschluss 21 abgesperrt, so dass kein weiteres Gas oder sonstiges Medium in den zwischen Absperrvorrichtung 24 und Kupplungsanschluss 22 vorgesehenen Raum 33 einströmen kann. Der in den Raum 33 herrschende Druck bleibt gleichwohl erhalten. Die Absperrvorrichtung 24 trennt somit in der Verschlussstellung die fluidische Verbindung zwischen Zufuhranschluss 21 und Messanschluss 23, nicht jedoch die fluidische Verbindung zwischen Messanschluss 23 und Kupplungsanschluss 22. Wird nun eine Medienleitung, beispielsweise ein Schlauch am Kupplungsanschluss 22 angeschlossen, kommt es zu einem Druckabfall im Raum 33 der über das nach wie vor am Messanschluss 23 angeordnete Messgerät erfasst und als Störung ausgegeben wird. Es kann somit eine Funktionsprüfung des Messgerätes durchgeführt werden, ohne dies von der Kupplung 10 zu lösen.

Im Ausführungsbeispiel ist der Zufuhranschluss 21 als an dem Kupplungsgehäuse 20 angeformtes Element ausgebildet. Über den Zufuhranschluss 21 kann die Verbindung mit beispielsweise einem Schaltschrank hergestellt werden. Um diese Verbindung zusätzlich abzudichten sind am Zufuhranschluss 21 Dichtungen 29a, 29b vorgesehen. Zusätzlich oder alternativ besteht die Möglichkeit, am Zufuhranschluss 21 einen Flansch (nicht dargestellt) anzuordnen. Dieser Flansch weißt dann Bohrungen auf, über die die Kupplung 10 mit einem das Gas beinhaltenden Gehäuse, beispielsweise einem Schaltschrank, verschraubt werden kann.

Um bei Sperrung der Kupplung 10 über die Absperrvorrichtung 24 eine zusätzliche Abdichtung zu erzielen, ist das Sperrelement 32 von einer zusätzlichen Dichtung 25 umgeben.

Der Kupplungsanschluss 22 ist im Ausführungsbeispiel als lösbares, im Kupplungsgehäuse 20 festlegbares Kupplungsstück 26 ausgebildet. Das Kupplungsstück 26 wird derart im Kupplungsgehäuse 20 eingesetzt, dass die fluidische Verbindung zwischen Messanschluss 23 und Kupplungsstück 26 hergestellt wird. Auch hier gewährleisten zusätzliche Dichtungen 27 die Dichtheit der Anordnung. Im Inneren des Kupplungsanschlusses 22 ist ein Betätigungselement 34 vorgesehen, das den Kupplungsanschluss 22 freigibt, sobald ein Kupplungsgegenstück (nicht dargestellt) am Kupplungsanschluss 22 eingesetzt wird. Durch diese Ausgestaltung wird Leckage am Kupplungsanschluss 22 wirkungsvoll verhindert.

Bei dem am Messanschluss 23 anordenbaren Messgerät handelt es sich bevorzugt um einen Dichtewächter, der im Betrieb beispielsweise der Schaltanlage an der Kupplung 10 verbleibt und Dichteänderungen, die als Druckabfall detektiert werden, erfasst, analysiert und bei unterschreiten eines Schwellenwertes signalisiert.

## Patentansprüche

1. Verwendung einer Kupplung zur Anordnung in einer Gasleitung einer gasisolierten Schaltanlage, die Kupplung wenigstens umfassend:
- ein Kupplungsgehäuse (20),
- einen Zufuhranschluss (21) für ein eine Strömungsrichtung durch die Kupplung aufweisendes Gas oder Gasgemisch,
- einen Kupplungsanschluss (22),
- einen mit dem Zufuhranschluss (21) und dem Kupplungsanschluss (22) in fluidischer Verbindung stehenden Messanschluss (23) für ein Messgerät, und
- eine Absperrvorrichtung (24) mit einer Verschlussstellung,
wobei die Absperrvorrichtung (24) in der Verschlussstellung die fluidische Verbindung zwischen Zufuhranschluss (21) und Messanschluss (23), nicht jedoch zwischen Messanschluss (23) und Kupplungsanschluss (22) absperrt, wobei der Kupplungsanschluss (22) als selbstschließender Kupplungsanschluss (22), insbesondere zur Verbindung mit einem den Kupplungsanschluss (22) freigebenden oder schließenden Kupplungsgegenstück ausgebildet ist.

2. Verwendung nach Anspruch 1, **dadurch gekennzeichnet, dass** die Absperrvorrichtung (24) dem Messanschluss (23) und dem Kupplungsanschluss (22) vorgelagert zwischen Zufuhranschluss (21) und Messanschluss (23) angeordnet ist.

3. Verwendung nach Anspruch 1 oder 2, **dadurch gekennzeichnet, dass** der Kupplungsanschluss (22) dem Zufuhranschluss (21) im Kupplungsgehäuse (20), insbesondere in Strömungsrichtung, gegenüberliegend angeordnet ist.

4. Verwendung nach einem der vorhergehenden Ansprüche, **dadurch gekennzeichnet, dass** die Absperrvorrichtung (24) manuell oder automatisch betätigbar ausgebildet ist und/oder die Absperrvorrichtung (24) als Kugelhahn ausgebildet ist.

5. Verwendung nach einem der vorhergehenden Ansprüche, **dadurch gekennzeichnet, dass** der Zufuhranschluss (21) als Teil des Kupplungsgehäuses (20) ausgebildet, insbesondere in das Kupplungsgehäuse (20) eingeformt oder an diesem angeformt vorgesehen ist.

6. Verwendung nach einem der vorhergehenden Ansprüche, **dadurch gekennzeichnet, dass** der Kupplungsanschluss als in das Kupplungsgehäuse (20) einsetzbares Element, insbesondere als einsetzbares und/oder im Kupplungsgehäuse (20) festlegbares Kupplungsstück (26) ausgebildet ist.

7. Verwendung nach Anspruch 6, **dadurch gekennzeichnet, dass** der Messanschluss (23) mit dem in das Kupplungsgehäuse (20) einsetzbaren Element koppelbar ist.

8. Verwendung einer Prüfanordnung mit einer Kupplung, zur Anordnung einer Messanordnung an einer Gasleitung einer gasisolierten Schaltanlage, wenigstens umfassend:
- einen Zufuhranschluss (21) für ein eine Strömungsrichtung durch die Kupplung aufweisendes Gas oder Gasgemisch,
- einen Kupplungsanschluss (22),
- einen mit dem Zufuhranschluss (21) und dem Kupplungsanschluss (22) in fluidischer Verbindung , stehenden Messanschluss, und
- eine Absperrvorrichtung (24) mit einer Verschlussstellung,
zur Prüfung eines am Messanschluss angeordneten Messgerätes, wobei die Absperrvorrichtung (24) in der Verschlussstellung die fluidische Verbindung zwischen Zufuhranschluss (21) und Messanschluss, nicht jedoch zwischen Messanschluss und Kupplungsanschluss (22) absperrt und der Kupplungsanschluss (22) als selbstschließender Kupplungsanschluss (22), insbesondere zur Verbindung mit einem den Kupplungsanschluss (22) freigebenden oder schließenden Kupplungsgegenstück ausgebildet ist.

9. Verwendung nach Anspruch 8, **dadurch gekennzeichnet, dass** an dem Kupplungsanschluss (22) ein einen gegenüber der Medienleitung erweiterten Querschnitt aufweisendes Medienauffangelement anordenbar ist.

10. Verwendung nach einem der Ansprüche 8 bis 9, **dadurch gekennzeichnet, dass** an dem Kupplungsanschluss (22) ein Prüfgerät, insbesondere eine mit einem Druckmessgerät versehene Druckquelle anschließbar ist.

## Claims

1. Use of a coupling for arrangement in a gas line of a gas-insulated switchgear, the coupling at least comprising:
- a coupling housing (20);
- a supply port (21) for a gas or gas mixture which has a flow direction through the coupling;
- a coupling port (22);
- a measuring port (23) for a measuring instrument, which measuring port is in fluid connection with the supply port (21) and the coupling port (22); and
- a shutoff device (24) having a closed position,
wherein the shutoff device (24), when in the closed position, shuts off the fluid connection between the supply port (21) and the measuring port (23), but not between the measuring port (23) and the coupling port (22), wherein the coupling port (22) is designed as a self-closing coupling port (22), in particular for connecting to a coupling counterpart which opens and closes the coupling port (22).

2. Use according to claim 1, **characterized in that** the shutoff device (24) is arranged upstream of the measuring port (23) and the coupling port (22), between the supply port (21) and the measuring port (23).

3. Use according to either claim 1 or claim 2, **characterized in that** the coupling port (22) is arranged opposite the supply port (21) in the coupling housing (20), in particular in the flow direction.

4. Use according to any of the preceding claims, **characterized in that** the shutoff device (24) is designed such that said device can be manually or automatically actuated and/or the shutoff device (24) is designed as a ball valve.

5. Use according to any of the preceding claims, **characterized in that** the supply port (21) is designed as part of the coupling housing (20), in particular is provided shaped into the coupling housing (20) or molded thereon.

6. Use according to any of the preceding claims, **characterized in that** the coupling port is designed as an element that can be inserted into the coupling housing (20), in particular as a coupling piece (26) which can be inserted and/or can be fixed in the coupling housing (20).

7. Use according to claim 6, **characterized in that** the measuring port (23) can be coupled to the element which can be inserted into the coupling housing (20).

8. Use of a test arrangement having a coupling, for arranging a measuring arrangement on a gas line of a gas-insulated switchgear, at least comprising:
- a supply port (21) for a gas or gas mixture which has a flow direction through the coupling;
- a coupling port (22);
- a measuring port in fluid connection with the supply port (21) and the coupling port (22); and
- a shutoff device (24) having a closed position,
for testing a measuring instrument arranged on the measuring port, wherein the shutoff device (24), when in the closed position, shuts off the fluid connection between the supply port (21) and the measuring port, but not between the measuring port and the coupling port (22), and the coupling port (22) is designed as a self-closing coupling port (22), in particular for connecting to the coupling counterpart which opens or closes the coupling port (22).

9. Use according to claim 8, **characterized in that** a media collecting element which has a widened cross section relative to the media line can be arranged on the coupling port (22).

10. Use according to either claim 8 or claim 9, **characterized in that** a test instrument, in particular a pressure source provided with a pressure gauge, can be connected to the coupling port (22).

## Revendications

1. Utilisation d'un couplage destiné à être placé dans une conduite de gaz d'une installation de distribution à isolation gazeuse, le couplage comprenant au moins :
- un boîtier de couplage (20),
- un orifice d'alimentation (21) destiné à un gaz ou un mélange de gaz présentant une direction d'écoulement à travers le couplage,
- un orifice de couplage (22),
- un orifice de mesure (23) pour un instrument de mesure, en communication fluidique avec l'orifice d'alimentation (21) et l'orifice de couplage (22), et
- un dispositif d'obturation (24) présentant une position fermée,
dans laquelle, en position fermée, le dispositif d'obturation (24) bloque la communication fluidique entre l'orifice d'alimentation (21) et l'orifice de mesure (23), mais pas entre l'orifice de mesure (23) et l'orifice de couplage (22), l'orifice de couplage (22) étant réalisé sous la forme d'un orifice de couplage (22) à fermeture automatique, en particulier destiné à être relié à une contre-pièce de couplage libérant ou fermant l'orifice de couplage (22).

2. Utilisation selon la revendication 1, **caractérisée en ce que** le dispositif d'obturation (24) est disposé en amont de l'orifice de mesure (23) et de l'orifice de couplage (22) entre l'orifice d'alimentation (21) et l'orifice de mesure (23).

3. Utilisation selon la revendication 1 ou 2, **caractérisée en ce que** l'orifice de couplage (22) est disposé à l'opposé de l'orifice d'alimentation (21) dans le boîtier de couplage (20), en particulier dans la direction d'écoulement.

4. Utilisation selon l'une des revendications précédentes, **caractérisée en ce que** le dispositif d'obturation (24) est réalisé de manière à pouvoir être actionné manuellement ou automatiquement et/ou **en ce que** le dispositif d'obturation (24) est réalisé sous la forme d'un robinet à boisseau sphérique.

5. Utilisation selon l'une des revendications précédentes, **caractérisée en ce que** l'orifice d'alimentation (21) est réalisé sous la forme d'une partie du boîtier de couplage (20), est formé en particulier dans le boîtier de couplage (20) ou est moulé sur celui-ci.

6. Utilisation selon l'une des revendications précédentes, **caractérisée en ce que** l'orifice de couplage est réalisé sous la forme d'un élément pouvant être inséré dans le boîtier de couplage (20), en particulier sous la forme d'une pièce de couplage (26) pouvant être insérée dans le boîtier de couplage (20) et/ou pouvant être fixé à celui-ci.

7. Utilisation selon la revendication 6, **caractérisée en ce que** l'orifice de mesure (23) peut être couplé à l'élément pouvant être inséré dans le boîtier de couplage (20).

8. Utilisation d'un dispositif de test comportant un couplage, pour l'agencement d'un dispositif de mesure au niveau d'une conduite de gaz d'une installation de distribution à isolation gazeuse, comprenant au moins :
- un orifice d'alimentation (21) destiné à un gaz ou un mélange de gaz présentant une direction d'écoulement à travers le couplage,
- un orifice de couplage (22),
- un orifice de mesure en communication fluidique avec l'orifice d'alimentation (21) et l'orifice de couplage (22), et
- un dispositif d'obturation (24) présentant une position fermée,
pour tester un instrument de mesure disposé au niveau de l'orifice de mesure, le dispositif d'obturation (24) bloquant la communication fluidique entre l'orifice d'alimentation (21) et l'orifice de mesure en position fermée, mais pas entre l'orifice de mesure et l'orifice de couplage (22), et l'orifice de couplage (22) étant réalisé sous la forme d'un orifice de couplage (22) à fermeture automatique, en particulier destiné à être relié à une contre-pièce de couplage libérant ou fermant l'orifice de couplage (22).

9. Utilisation selon la revendication 8, **caractérisée en ce qu'un** élément collecteur de fluide présentant une section transversale élargie par rapport à la conduite de fluide peut être disposé au niveau de l'orifice de couplage (22).

10. Utilisation selon les revendications 8 à 9, **caractérisée en ce qu'un** dispositif de test, en particulier une source de pression équipée d'un manomètre, peut être relié à l'orifice de couplage (22).
